# EUROPÄISCHE PATENTSCHRIFT

(11) **EP 3 383 694 B1**
(45) Veröffentlichungstag und Bekanntmachung des Hinweises auf die Patenterteilung: **20.05.2020**
(21) Anmeldenummer: 16801447.0
(22) Anmeldetag: 24.11.2016
(51) Int. Cl.: B60L 15/20, G08G 1/0967

(54) **VERFAHREN ZUR ANSTEUERUNG EINER ELEKTRISCHEN MASCHINE FÜR DEN ANTRIEB EINES KRAFTFAHRZEUGS UND KRAFTFAHRZEUG**
CONTROL METHOD OF AN ELECTRICAL MACHINE TO DRIVE A VEHICLE AND CORRESPONDING VEHICLE
PROCEDE DE COMMANDE POUR MACHINE ELECTRIQUE AFIN DE PROPULSER UN VEHICULE ET VEHICULE ASSOCIE

(30) Priorität: 04.12.2015 DE 102015015697
(43) Veröffentlichungstag der Anmeldung: 10.10.2018
(73) Patentinhaber: Audi AG, 85045 Ingolstadt (DE)
(72) Erfinder: STRASSER, Roman, 85080 Gaimersheim (DE)
(86) Internationale Anmeldenummer: PCT/EP2016/078677
(87) Internationale Veröffentlichungsnummer: WO 2017/093113

(56) Entgegenhaltungen:
- EP-A1- 2 609 314
- EP-A2- 2 110 289
- DE-A1-102004 011 938
- DE-A1-102011 101 487
- US-A- 5 077 508
- US-B1- 6 629 515

## Beschreibung

Die Erfindung betrifft ein Verfahren zur Ansteuerung einer elektrischen Maschine für den Antrieb eines Kraftfahrzeugs.

Bei bekannten hybrid oder vollständig elektrisch angetriebenen Fahrzeugen wird ein Beschleunigungswunsch eines Fahrers typischerweise umgesetzt, indem ein die Betätigung eines Fahrpedals des Kraftfahrzeugs beschreibendes Signal durch ein einer elektrische Maschine zugeordnetes Steuergerät ausgewertet wird. In Abhängigkeit dieses Signals wird die elektrische Maschine dann zur Erzeugung einer ermittelten Drehzahl beziehungsweise eines ermittelten Drehmoments angesteuert. Zur Verbesserung des Energieverbrauchs der elektrischen Maschine ist es zudem bekannt, im Stillstand des Kraftfahrzeugs oder bei einem nicht aktiv angetriebenen Segeln des Kraftfahrzeugs ein Magnetfeld in der elektrischen Maschine zurückzunehmen und erst bei einem erneuten Beschleunigungswunsch wieder aufzubauen. Bei einer Asynchronmaschine mit Käfigläufer wird so beispielsweise im Stillstand oder im Segelbetrieb das durch Statorwicklungen der elektrischen Maschine erzeugte Drehfeld reduziert oder vollständig abgeschaltet. Der erneute Aufbau des Drehfelds bei einer gewünschten Beschleunigung des Kraftfahrzeugs nimmt jedoch eine gewisse Latenzzeit in Anspruch, während der die Drehzahlerhöhung noch nicht umgesetzt werden kann. Dies reduziert das effektive Beschleunigungsvermögen des Kraftfahrzeugs und verlängert beispielsweise die Zeitspanne für eine Beschleunigung von O km/h auf 100 km/h.

Zur Verbesserung des Beschleunigungsvermögens elektrisch angetriebener Kraftfahrzeuge ist es aus der US 2010/0 116 575 A1 bekannt, einen Aufwärtswandler vorzusehen, der einem die Statorwicklungen speisenden Umrichter eine erhöhte Spannung bereitstellt. Zudem ist ein Steuergerät vorgesehen, welches die erhöhte Spannung begrenzt, wenn ein blockierter Zustand der gespeisten elektrischen Maschine erfasst wird und sowohl ein Fahrpedal als auch ein Bremspedal nicht betätigt werden. Eine Reduzierung der zuvor genannten Latenzzeiten lässt sich so jedoch nicht umsetzen.

Aus DE 10 2011 101 487 A1 ist ein als Elektrofahrzeug ausgebildetes Fahrzeug mit einer elektrischen Maschine bekannt. Die elektrische Maschine ist dabei über eine Verarbeitungseinheit mit einem elektrischen Energiespeicher gekoppelt, wobei in Abhängigkeit einer Ansteuerung der Verarbeitungseinheit Energie von dem elektrischen Energiespeicher zur elektrischen Maschine geführt werden kann, um ein vorbestimmtes Antriebsmoment auf die Vorderräder auszuüben, und umgekehrt. Beim Lösen eines getretenen Bremspedals kann das Drehmoment von einem ersten negativen Wert auf einen zweiten negativen Wert erhöht werden. Beim Treten eines Fahrpedals kann das Drehmoment entsprechend von dem zweiten negativen Wert auf einen positiven Wert erhöht.

US 6 629 515 B1 beschreibt ein Verfahren zur Steuerung und/oder Regelung der Leistung eines Antriebsmotors, wobei der Abstand eines Fußes des Fahrers zu einem Fahrpedal erfasst wird und bei einem Unterschreiten wenigstens eines vorgegebenen Mindestabstandes des Fußes von dem Fahrpedal wenigstens eine Maßnahme eingeleitet wird. Diese Maßnahme kann in einer Erhöhung der Bestromung eines Elektromotors mit einer Leistungselektronik bei einem elektrischen Antriebsmotor bestehen.

In US 2010/116575 A1 wird ein Verfahren beschrieben, bei dem ein Motordrehmoment erhöht wird, wenn eine gleichzeitige Betätigung eines Gaspedals und eines Bremspedals bei Stillstand des Fahrzeugs erfolgt.

Unter https://teslamotorsclub.com/tmc/threads/firmware-7-0-beta-discussion.52021/page-49 wird eine Funktion eines Fahrzeugs diskutiert, bei der im Stillstand des Fahrzeugs der Motor komplett von einer Stromversorgung getrennt wird. Die Aktivierung einer solchen Funktion wird unter https://forums.tesla.com/forum/forums/rwd-cars-when-does-v7-torque-sleep-kick beschrieben.

Der Erfindung liegt daher die Aufgabe zugrunde, eine Möglichkeit zur Verbesserung des Beschleunigungsverhaltens bzw. der Reaktionszeit auf einen Beschleunigungswunsch des Fahrers eines durch eine elektrische Maschine angetriebenen Kraftfahrzeugs anzugeben.

Zur Lösung dieser Aufgabe wird erfindungsgemäß ein Verfahren gemäß Anspruch 1 vorgeschlagen.

Die Erfindung beruht auf der Überlegung, den bevorstehenden Beschleunigungswunsch zu antizipieren und das Magnetfeld in der elektrischen Maschine vorbereitend auf das Bestätigungssignal frühzeitig aufzubauen. Es wird mithin eine Vormagnetisierung der elektrischen Maschine durchgeführt, was auch als eine Vorsteuerung erachtet werden kann. Der elektrischen Maschine ist dazu bevorzugt eine Steuereinrichtung, insbesondere ein Motorsteuergerät, zugeordnet, welche wenigstens ein Eingangssignal auswertet und bei Vorliegen eines als Ankündigungssignal definierten Eingangssignals die elektrische Maschine zur Erhöhung wenigstens eines in ihr erzeugten Magnetfelds ansteuert. Die Erhöhung oder der Aufbau des Magnetfelds kann je nach Typ der elektrischen Maschine unmittelbar im Stator und auch durch Induktionseffekte im Rotor bzw. unmittelbar im Rotor und auch durch Induktionseffekte im Stator erfolgen.

Wird anschließend wenigstens ein weiteres Eingangssignal, das als Bestätigungssignal definiert ist, erfasst, so wird die elektrische Maschine zur Erhöhung ihrer Drehzahl und/oder ihres Drehmoments angesteuert, wobei das wenigstens eine Magnetfeld bereits teilweise oder vollständig aufgebaut ist und so die Erhöhung der Drehzahl und/oder des Drehmoments durch die elektrische Maschine wesentlich zügiger erfolgen kann. Zweckmäßigerweise beschreibt das Bestätigungssignal somit eine aktive Bedieneingabe des Fahrers, welche auf ein sofortiges Beschleunigen des Kraftfahrzeugs gerichtet ist. Mit anderen Worten wird die elektrische Maschine aus einem ersten Betriebszustand, in dem das wenigstens eine Magnetfeld deaktiviert ist oder nur mit reduzierter Flussdichte erzeugt wird, bei Vorliegen des Ankündigungssignals in einen zweiten Betriebszustand überführt, welchem die elektrische Maschine unmittelbar zur Erhöhung ihrer Drehzahl und/oder ihres Drehmoments ansteuerbar ist. Insbesondere liegt der erste Betriebszustand der elektrischen Maschine vor, wenn das Kraftfahrzeug sich im Stillstand oder in einem Segelbetrieb befindet. Im Rahmen des erfindungsgemäßen Verfahrens können grundsätzlich alle Typen von elektrischen Maschinen, insbesondere Asynchronmaschinen, permanenterregte Synchronmaschinen oder fremderregte Synchronmaschinen, verwendet werden.

Durch die erfindungsgemäße Ansteuerung der elektrischen Maschine kann so eine für die Erhöhung der Flussdichte des wenigstens einen Magnetfelds erforderliche Latenzzeit verkürzt oder vermieden werden, die dadurch entsteht, dass bei einem Beschleunigungswunsch des Fahrers sonst zunächst das wenigstens eine Magnetfeld aufgebaut werden müsste, um anschließend die elektrische Maschine zur Erhöhung ihrer Drehzahl und/oder ihres Drehmoments anzusteuern. Gegenüber herkömmlichen Verfahren, die eine temporäre Erhöhung der das wenigstens eine Magnetfeld erzeugenden Ströme und/oder Spannungen vorsehen, kann so ein verbessertes Beschleunigungsverhalten erzielt werden, ohne zusätzliche Leistungselektronik vorzusehen bzw. bei gleichzeitiger Verwendung leistungselektronischer Einrichtungen in Form von Aufwärtswandlern eine schnellere Bereitstellung der von ihnen erzeugten Leistung realisiert werden. Zudem wird ein Beschleunigungswunsch des Fahrers aufgrund der Antizipation schneller in eine reale Erhöhung der Drehzahl und/oder des Drehmoments umgesetzt, so dass ein agileres und sportlicheres Fahrverhalten des Kraftfahrzeugs ermöglicht wird.

Es wird bei dem erfindungsgemäßen Verfahren besonders bevorzugt, wenn die elektrische Maschine einen Stator mit mehreren Statorwicklungen zum Erzeugen eines Statorfelds als Magnetfeld aufweist, wobei zum Erhöhen der Flussdichte des Statorfelds die Statorwicklungen bestromt werden. Die elektrische Maschine ist dabei besonders bevorzugt als Asynchronmaschine ausgebildet, da in diesem Fall ein magnetisches Rotorfeld immer erst über das Drehfeld des Stators erzeugt werden muss, wodurch bei herkömmlichen Verfahren besonders hohe Latenzzeiten entstehen. Durch die erfindungsgemäße Ansteuerung können derartige Latenzzeiten in der Größenordnung von 100 ms vermieden oder zumindest reduziert werden. Die elektrische Maschine kann aber auch eine Synchronmaschine, insbesondere mit einem permanenten Erregerfeld, sein, da auch hier Latenzzeiten für den Aufbau des Statorfelds entstehen und entsprechend reduzierbar sind.

Es ist bei dem erfindungsgemäßen Verfahren ebenso möglich, dass die elektrische Maschine einen Rotor mit wenigstens einer Erregerwicklung zum Erzeugen eines Erregerfelds als Magnetfeld aufweist, wobei zum Erhöhen der Flussdichte des Erregerfelds die wenigstens eine Erregerwicklung bestromt wird. Typischerweise ist die elektrische Maschine in diesem Fall eine fremderregte Synchronmaschine, wobei hier auch besonders bevorzugt zusätzlich ihre Statorwicklungen zum Erhöhen der Flussdichte des Statorfelds wie zuvor beschrieben bestromt werden.

Bei der Durchführung des erfindungsgemäßen Verfahrens wird zweckmäßigerweise ein Bestätigungssignal verwendet, welches bei einem Betätigen einer Fahrbetätigungsvorrichtung des Kraftfahrzeugs erzeugt wird. Typischerweise ist die Fahrbetätigungsvorrichtung ein Fahrpedal des Kraftfahrzeugs, wobei je nach Ausbildung des Kraftfahrzeugs selbstverständlich auch Fahrbetätigungsvorrichtungen in Form von Drehgriffen oder sonstigen manuellen Betätigungsvorrichtungen verwendet werden können. Der Fahrer löst dann die Beschleunigung des Kraftfahrzeugs in gewohnter Weise aus, wobei aufgrund des vorbereitend erfolgten Aufbaus des wenigstens einen Magnetfelds eine zügige Umsetzung seines Beschleunigungswunsches erzielt wird.

Hinsichtlich der Auswahl geeigneter Ankündigungssignale ist zudem eine Vielzahl von Möglichkeiten denkbar. Es wird bei dem erfindungsgemäßen Verfahren beispielsweise bevorzugt, wenn ein Ankündigungssignal verwendet wird, welches bei einem Lösen einer Bremsenbetätigungsvorrichtung erzeugt wird. Die Bremsenbetätigungsvorrichtung wirkt dabei bevorzugt auf die Betriebsbremsanlage und kann als Bremspedal oder Bremshebel ausgebildet sein. Ebenso kann das Ankündigungssignal bei Lösen einer Feststellbremse des Kraftfahrzeugs erzeugt werden. Entscheidend ist dabei, dass mit dem Lösen der Bremsenbetätigungsvorrichtung davon ausgegangen werden kann, dass der Fahrer das Kraftfahrzeug in naher Zukunft beschleunigen möchte und in Vorbereitung auf einen solchen künftigen Beschleunigungswunsch das Magnetfeld erhöht wird.

Es kann alternativ oder zusätzlich dazu auch vorgesehen sein, dass ein Ankündigungssignal verwendet wird, welches bei einem Betätigen eines nicht einer Fahrbetätigungsvorrichtung entsprechenden Bedienelements erzeugt wird. Dabei kann es sich beispielsweise um ein Tastelement oder eine Einstellungsmöglichkeit einer Mensch-Maschine-Schnittstelle des Kraftfahrzeugs handeln, über die der Fahrer ein zügiges Beschleunigen des Kraftfahrzeugs ankündigen kann. Typischerweise schaltet der Fahrer das Kraftfahrzeug mittels eines solchen Bedienelements in einen Sportmodus oder ähnliches, der neben seiner Wirkung als Ankündigungssignal auch Fahrwerkseinstellungen oder Ähnliches für einen sportlicheren Fahrbetrieb vorgibt. Betätigt der Fahrer ein solches Bedienelement kann mithin davon ausgegangen werden, dass er in naher Zukunft einen Beschleunigungswunsch hat.

Ebenso kann es bei dem erfindungsgemäßen Verfahren vorgesehen sein, dass ein Ankündigungssignal verwendet wird, welches durch Auswerten von Sensordaten eines eine Annäherung des Fahrers an eine Fahrbetätigungsvorrichtung vermessenden Näherungssensors erzeugt wird. Dazu weist die Fahrbetätigungsvorrichtung, also insbesondere das Fahrpedal, einen Näherungssensor auf, der ein Bewegen des Fahrers, insbesondere seines Fußes, an die Fahrbetätigungsvorrichtung erfasst und dies als einen bevorstehenden Beschleunigungswunsch des Fahrers auswertet. Der besondere Vorteil eines so erzeugten Ankündigungssignals liegt darin, dass der Fahrer unbemerkt bei seiner gewohnten Bewegung zur Beschleunigung des Kraftfahrzeugs das Ankündigungssignal auslöst, so dass kurze Zeit nach Auswertung der Sensordaten des Näherungssensors das Bestätigungssignal durch Berühren der Fahrbetätigungsvorrichtung erzeugt wird.

Von klassischen Kraftfahrzeugen mit Verbrennungsmotoren und einem automatischen Schaltgetriebe ist zudem die Funktion "launch control" bekannt, bei der der Verbrennungsmotor durch gleichzeitiges Betätigen des Bremspedals und des Fahrpedals bereits im Stand auf eine erhöhte Drehzahl gebracht wird und anschließend über eine Anfahrkupplung maximal beschleunigt wird. Bei elektrisch betriebenen Kraftfahrzeugen ist jedoch häufig keine Anfahrkupplung vorgesehen, die einen solchen Startvorgang ermöglichen würde. Um dem Fahrer des durch die elektrische Maschine betriebenen Kraftfahrzeugs jedoch eine ähnliche Funktion bereitzustellen, kann im Rahmen des erfindungsgemäßen Verfahrens bei einem Stillstand des Kraftfahrzeugs ein Ankündigungssignal verwendet werden, welches bei einem Betätigen einer Fahrbetätigungsvorrichtung gemeinsam mit einer Bremsenbetätigungsvorrichtung erzeugt wird, wobei bei Vorliegen dieses Ankündigungssignals ein Bestätigungssignal verwendet wird, welches bei einem Loslösen der Bremsenbetätigungsvorrichtung erzeugt wird. Der Fahrer kann so in bekannter Weise aus dem Stand durch gleichzeitiges Betätigen von Bremspedal und Gaspedal das Ankündigungssignal erzeugen und so eine Erhöhung der Flussdichte des wenigstens einen Magnetfelds anfordern. Löst er dann die Bremsenbetätigungsvorrichtung, kann die elektrische Maschine sofort zur Erhöhung der Drehzahl und/oder des Drehmoments angesteuert werden und ihr Drehmoment bereitstellen, ohne dass dieser Beschleunigungsvorgang durch Latenzzeiten wegen eines zunächst erforderlichen Aufbau des wenigstens einen Magnetfelds verzögert wird.

Es ist bei dem erfindungsgemäßen Verfahren vorgesehen, dass ein Ankündigungssignal verwendet wird, welches durch Auswerten einer eine Umgebung eines Kraftfahrzeugs in Fahrtrichtung beschreibenden Umgebungsinformation erzeugt wird. Derartige Umgebungsinformationen können beispielsweise durch eine Navigationseinrichtung des Kraftfahrzeugs bereitgestellt werden, deren Ausgangssignale als Eingangssignale der Steuereinrichtung der elektrischen Maschine auswertbar sind. In analoger Weise können Umgebungsinformationen aber auch durch Sensoren des Kraftfahrzeugs, wie Bild-, Ultraschall-, Radar- oder Lasersensoren, oder den Fahrzustand des Kraftfahrzeugs erfassende Sensoren, beispielsweise einer Fahrdynamikregelungseinrichtung des Kraftfahrzeugs, erzeugt werden. Zweckmäßigerweise erhält die Steuereinrichtung diese Umgebungsinformationen über eine Anbindung an ein Bussystem des Kraftfahrzeugs, dessen Datensignale sie zur Erfassung von als Ankündigungssignal definierten Datensignalen erhält.

Erfindungsgemäß ist vorgesehen, dass die Umgebungsinformation eine Aufhebung oder eine Erhöhung einer Geschwindigkeitsbeschränkung beschreibt. Solche Umgebungsinformationen können beispielsweise aus der Navigationseinrichtung oder mittels einer die Umgebung des Kraftfahrzeugs erfassenden Kamera gewonnen werden. Die Auffassung einer solchen Umgebungsinformation als Ankündigungssignal ist besonders zweckmäßig, weil damit gerechnet werden kann, dass der Fahrer in Kenntnis der Aufhebung oder Erhöhung der erlaubten Höchstgeschwindigkeit alsbald das Fahrzeug beschleunigen will.

Es kann alternativ oder zusätzlich aber auch eine ein Passieren eines Kurvenscheitels einer durch das Kraftfahrzeug befahrenen Kurve beschreibende Umgebungsinformation verwendet werden. Eine solche Umgebungsinformation kann durch topografische Informationen der Navigationseinrichtung oder durch Auswertung der Gierrate oder des Lenkeinschlags des Kraftfahrzeugs, wozu insbesondere Sensordaten der Fahrdynamikregelungseinrichtung ausgewertet werden, gewonnen werden. Hat der Fahrer bei Einfahrt in die Kurve beispielsweise die Betätigung der Fahrbetätigungsvorrichtung beendet, um die Kurve mit angemessener Geschwindigkeit zu durchfahren, so ist mit dem Passieren des Kurvenscheitels damit zu rechnen, dass er das Kraftfahrzeug wieder beschleunigen will, so dass ein derart gewähltes Ankündigungssignal eine besonders realitätsnahe Antizipation eines Beschleunigungswunsches ermöglicht.

Schließlich wird es besonders bevorzugt, wenn die Umgebungsinformation ein Lichtzeichen einer Lichtzeichenanlage, welches eine Fahrtfreigabe erteilt oder die Erteilung oder Beendigung der Fahrtfreigabe ankündigt, beschreibt. In der Praxis wird ein Fahrer sein Kraftfahrzeug typischerweise beschleunigen, wenn eine Lichtzeichenanlage eine Fahrtfreigabe ankündigt oder erteilt, insbesondere durch eine Deaktivierung von Rotlicht, durch ein Übergang von rot auf gelb, von rot auf rot und gelb oder von gelb und/oder rot auf grün. Es ist aber genauso denkbar, dass ein Fahrer, der sich einer Lichtzeichenlage nähert, die beispielsweise durch Gelblicht eine baldige Beendigung der Fahrtfreigabe ankündigt, sein Fahrzeug nochmals beschleunigen will, um die Lichtzeichenanlage noch schnell zu passieren. Durch Auswertung von Bilddaten der Kamera des Kraftfahrzeugs kann eine solche Umgebungsinformation erzeugt werden, die ebenfalls zur Antizipation einer künftigen Beschleunigung ausgewertet wird. Es ist aber auch denkbar, dass derartige Umgebungsinformationen über Kraftfahrzeug-zu-Infrastruktur-Kommunikation bereitgestellt werden.

Bei dem erfindungsgemäßen Verfahren kann zweckmäßigerweise auch vorgesehen sein, dass die Flussdichte nach Vorliegen des Ankündigungssignals bei Ablauf einer vorgegebenen Zeitspanne und Ausbleiben eines Bestätigungssignals verringert wird. Sollte sich nach Erhöhen der Flussdichte des wenigstens einen Magnetfelds herausstellen, dass der Fahrer keinen Beschleunigungswunsch eingegeben hat, so wird nach Ablauf einer Zeitspanne von beispielsweise 1 bis 10 Sekunden die vorbereitendes Flussdichteerhöhung zurückgenommen, um den elektrischen Energiebedarf zu begrenzen.

Daneben betrifft die Erfindung ein Kraftfahrzeug, umfassend eine elektrische Maschine zum Antreiben des Kraftfahrzeugs und eine Steuereinrichtung, wobei die elektrische Maschine durch die Steuereinrichtung gemäß dem erfindungsgemäßen Verfahren ansteuerbar ist. Sämtliche Ausführungen zum erfindungsgemäßen Verfahren lassen sich analog auf das erfindungsgemäße Kraftfahrzeug übertragen, so dass auch mit diesen die zuvor genannten Vorteile erzielt werden können.

Weitere Einzelheiten und Vorteile der Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs; und
- Fig. 2: ein Flussdiagramm eines erfindungsgemäßen Verfahrens zur Ansteuerung einer elektrischen Maschine für den Antrieb des in Fig. 1 gezeigten Kraftfahrzeugs.

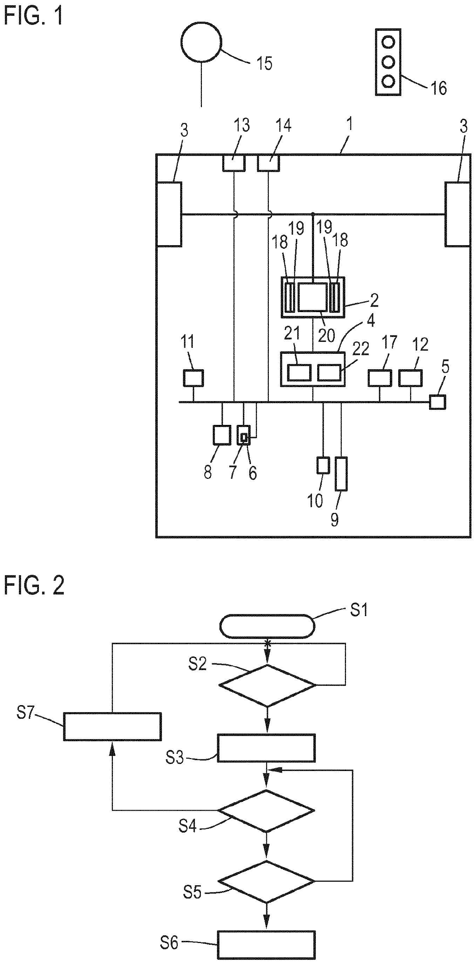

Fig. 1 zeigt eine Prinzipskizze eines Kraftfahrzeugs 1, umfassend eine elektrische Maschine 2 zum Antreiben des Kraftfahrzeugs 1, mehrere Räder 3, an die ein Drehmoment der elektrischen Maschine 2 übertragen wird, eine die elektrische Maschine 2 ansteuernde Steuereinrichtung 4 sowie einen Datenbus 5, auf welchen die Steuereinrichtung 4 zugreift.

Das Kraftfahrzeug 1 weist daneben eine Fahrbetätigungsvorrichtung 6 in Form eines Fahrpedals mit einem Näherungssensor 7 auf, welcher eine Annäherung eines Fußes eines Fahrers an die Fahrbetätigungsvorrichtung 6 vermisst und diese Annäherung beschreibende Sensordaten erzeugt. Es sind zudem eine auf eine Betriebsbremsanlage des Kraftfahrzeugs 1 wirkende erste Bremsenbetätigungsvorrichtung 8 in Form eines Bremspedals sowie eine auf eine Feststellbremse des Kraftfahrzeugs 1 wirkende zweite Bremsenbetätigungsvorrichtung 9 in Form eines Handhebels vorgesehen. Über ein Bedienelement 10, welches als Tastelement oder als Eingabemöglichkeit an eine Mensch-Maschine-Schnittstelle ausgebildet ist, kann der Fahrer einen Sportmodus des Kraftfahrzeugs 1 aktivieren, in dem unter anderem auch eine härtere Fahrwerkseinstellung vorgegeben wird. Des Weiteren weist das Kraftfahrzeug 1 eine Fahrdynamikregelungseinrichtung 11 auf, welche die Funktion eines elektronischen Stabilitätsprogramms (ESP) umsetzt und eine Vielzahl von Sensoren zur Ermittlung von Fahrparametern wie der Gierrate oder eines Lenkwinkels umfasst. Außerdem ist eine Navigationseinrichtung 12 vorgesehen, die topografische Informationen zur Umgebung des Kraftfahrzeugs 1 bereitstellt. Frontseitig im Kraftfahrzeug sind ferner eine Kamera 13 und ein weiterer Umgebungssensor 14, beispielsweise in Form eines Radar-, Ultraschall- oder Lasersensors angeordnet, welche die Umgebung des Kraftfahrzeugs in Fahrtrichtung erfassen. Exemplarisch sind ein Verkehrszeichen 15 sowie eine Lichtzeichenanlage 16 gezeigt, die sich in der Umgebung des Kraftfahrzeugs 1 befinden können. Über eine Kommunikationseinrichtung 17 des Kraftfahrzeugs erhält das Kraftfahrzeug 1 zudem über Kraftfahrzeug-zu-Infrastruktur-Kommunikation Informationen über den Betriebszustand der Lichtzeichenanlage 16. Die zuvor genannten Komponenten weisen jeweils eine Kommunikationsverbindung mit dem Bussystem 5 auf und stellen darauf Datensignale für die Steuereinrichtung 4 bereit.

Die elektrische Maschine 2 ist als Asynchronmaschine ausgebildet und umfasst einen Stator 18 mit mehreren Statorwicklungen 19 sowie einen Rotor 20 in Form eines Käfigläufers. Die Statorwicklungen 20 erzeugen ein Magnetfeld in Form eines Statorfelds, dessen Flussdichte in Abhängigkeit einer Ansteuerung durch die Steuereinrichtung 4 veränderbar ist. Die Steuereinrichtung 4 weist daneben eine Speichereinheit 21 und einen Timer 22 auf und steuert die elektrische Maschine 2 wie folgt beschrieben an:
Fig. 2 ist ein Flussdiagramm eines Verfahrens zur Ansteuerung der elektrischen Maschine 2 für den Antrieb des Kraftfahrzeugs 1.

In einem Schritt S1 befindet sich die elektrische Maschine 2 in einem ersten Betriebszustand, in welchem die Statorwicklungen 19 nur mit einer sehr geringen Leistung bestromt werden, da sich das Kraftfahrzeug 1 im Stillstand befindet oder im Segelbetrieb fährt. Das Verfahren zielt nun darauf ab, bei einem Beschleunigungswunsch des Fahrers den Beschleunigungsvorgang möglichst schnell einzuleiten, also ohne oder nur mit geringen Latenzzeiten, die für den Aufbau des durch die Statorwicklungen 19 erzeugten Statorfelds erforderlich sind.

Dazu wird in einem Schritt S2 fortlaufend überprüft, ob ein einen Beschleunigungswunsch des Fahrers ankündigendes Ankündigungssignal vorliegt. Dazu werden die Datensignale auf dem Bussystem 5 erfasst und ausgewertet, wobei in der Speichereinheit 21 bestimmte als Ankündigungssignale auszuwertende Ausprägungen von Datensignalen abgelegt sind. Die verwendeten Ankündigungssignale sind dabei so definiert, dass bei ihrem Vorliegen auf einen bevorstehenden Beschleunigungswunsch des Fahrers geschlossen werden kann.

Es wird zum einen davon ausgegangen, dass der Fahrer beschleunigen will, wenn er eine der Bremsenbetätigungsvorrichtungen 8, 9 löst, das Bedienelement 8 betätigt, um in den Sportmodus zu schalten, oder der Näherungssensor 7 Sensordaten erzeugt, die eine Annäherung des Fußes des Fahrers an die Fahrbetätigungsvorrichtung 6 anzeigen. Außerdem wertet die Steuereinrichtung 4 auch bestimmte durch die Fahrdynamikregelungseinrichtung 11, die Kamera 13, den weiteren Umgebungssensor 14 oder die Kommunikationseinrichtung 17 erzeugte Umgebungsinformation als Steuersignal aus.

So wird die Erfassung einer Aufhebung oder Anhebung einer Geschwindigkeitsbeschränkung durch das Verkehrszeichen 15 als Ankündigungssignal ausgewertet, weil damit zu rechnen ist, dass der Fahrer das Kraftfahrzeug 1 beschleunigen will. Analog dazu wird bei Erfassung eines eine Fahrtfreigabe erteilenden oder die Erteilung oder Beendigung der Fahrtfreigabe ankündigenden Lichtzeichens der Lichtzeichenanlage 16 ein solcher baldiger Beschleunigungswunsch angenommen. Dies liegt beispielsweise dann vor, wenn das Lichtzeichen (je nach durch straßenverkehrsrechtliche Vorschriften vorgegebener Lichtfolge) von rot auf grün, von rot auf gelb von rot auf rot-gelb, von gelb auf grün oder von rot-gelb auf grün wechselt. Ebenso ist vorgesehen, dass bei Erfassung einer Beendigung der Fahrtfreigabe, also bei einem Wechsel von grün auf gelb oder von grün auf grün-gelb, ein Ankündigungssignal ausgewertet wird, da der Fahrer in diesem Fall vielleicht kurzfristig beschleunigen möchte, um die Lichtzeichenanlage 16 noch vor Aufhebung der Fahrtfreigabe legal zu passieren. Bei entsprechender Ausrüstung der Lichtzeichenanlage 16 kann der jeweilige Signalzustand auch über die Kommunikationseinrichtung 17 per Fahrzeug-zu-Infrastruktur-Kommunikation übermittelt und entsprechend ausgewertet werden.

Es ist ferner vorgesehen, dass bei einer Umgebungsinformation, die ein Passieren eines Kurvenscheitels einer durch das Kraftfahrzeug 1 befahrenen Kurve beschreibt, ein Ankündigungssignal erzeugt wird. Dazu werden der Lenkwinkel und die Gierrate des Kraftfahrzeugs 1, welche durch die Fahrdynamikregelungseinrichtung 11 erfasst werden, und topografische Informationen über den Kurvenverlauf der Navigationseinrichtung 17 ausgewertet.

Ein weiteres Ankündigungssignal wird zudem erzeugt, wenn sich das Kraftfahrzeug im Stillstand befindet und gleichzeitig die Fahrbetätigungsvorrichtung 7 und die erste Bremsbetätigungseinrichtung 8 betätigt wird. Eine solche Betätigung des Fahr- und des Bremspedals entspricht einer Launch-Control-Funktion klassischer Kraftfahrzeuge mit Verbrennungsmotor, bei der zur Erzeugung einer möglichst hohen Anfahrtsbeschleunigung der Verbrennungsmotor bei geöffneter Anfahrtkupplung auf eine hohe Drehzahl gebracht wird.

Liegt keines der zuvor genannten Ankündigungssignale vor, so wird Schritt S2 zyklisch wiederholt. Sobald hingegen ein Ankündigungssignal vorliegt, wird das Verfahren in einem Schritt S3 fortgesetzt und die elektrische Maschine 2 in einem zweiten Betriebszustand überführt. Dabei wird die elektrische Maschine 2 zur Erhöhung der Flussdichte des Statorfelds des Stators 18 angesteuert, wobei die Statorwicklungen 19 mit einer höheren Leistung bestromt werden. Es baut sich also durch Vormagnetisierung ein kräftiges Drehfeld innerhalb des Stators 18 auf, um ein zügiges Beschleunigen des Kraftfahrzeugs 1 bei einem künftigen Beschleunigungswunsch des Fahrers zu ermöglichen. Dies kann auch als Vorsteuerung der elektrischen Maschine 2 erachtet werden. Die Frequenz des Drehfelds wird dabei so gewählt, dass es synchron mit der Drehzahl des Rotors 20 verläuft, also kein Drehmoment durch die elektrische Maschine 2 erzeugt wird. Außerdem wird im Schritt S3 der Timer 22 angestoßen.

Dieser wird in einem Schritt S4 darauf überprüft, ob eine vorgegebene, in der Speichereinheit 21 abgelegte Zeitspanne abgelaufen ist. Ist dies nicht der Fall, wird das Verfahren mit einem anschließenden Schritt S5 fortgesetzt, indem das Vorliegen eines den ankündigenden Beschleunigungswunsch bestätigenden Bestätigungssignals überprüft wird. Als Bestätigungssignal ist ein Betätigen der Fahrbetätigungsvorrichtung 7 in der Speichereinheit 21 abgelegt. Eine Ausnahme gilt jedoch für den Fall, dass das Ankündigungssignal das gleichzeitige Betätigen der Fahrbetätigungsvorrichtung 6 und der ersten Bremsenbetätigungsvorrichtung 8 war. In diesem Fall wird als Bestätigungssignal das Lösen der ersten Bremsenbetätigungsvorrichtung 8 erfasst, was dem beschleunigten Anfahren bei Launch Control mit einem klassischen Verbrennungsmotor entspricht. Liegt kein Bestätigungssignal vor, so wird für die weiteren Durchführung des Verfahrens in Schritt S4 zurückgesprungen.

Anderenfalls wird bei Vorlegen des Bestätigungswunsches ein Schritt S6 ausgeführt, indem die elektrische Maschine 2 zur Erhöhung ihrer Drehzahl und ihres Drehmoments angesteuert wird. Das heißt, die Statorwicklungen 19 werden nun so bestromt, dass ein Schlupf bezüglich der Rotationsfrequenz des Rotors 20 gegeben ist und so das Drehmoment mit der erhöhten Drehzahl an die Räder 3 geleitet wird. Die Beschleunigung erfolgt mithin unmittelbar bei Erfassung des Beschleunigungswunsches des Fahrers entweder durch das Betätigen der Fahrbetätigungsvorrichtung 6 oder Lösen der ersten Bremsenbetätigungsvorrichtung 8. Bei der Ansteuerung einer herkömmlichen elektrischen Maschine, die nur das Betätigen eines Fahrpedals zur Ansteuerung verwendet müsste zu diesem Zeitpunkt erst ein Magnetfeld aufgebaut werden, um danach eine Erhöhung der Drehzahl oder des Drehmoments und mithin eine Beschleunigung vollziehen zu können. Durch das Verfahren wird die dazu erforderliche Latenzzeit vermieden und ein schnellerer Beginn der Beschleunigung ermöglicht.

Erreicht in Schritt S4 der Timer die vorgegebene Zeitspanne, so ist es innerhalb dieser nicht zu einem Bestätigungssignal gekommen und Verfahren wird in einem Schritt S7 fortgesetzt. In diesem wird die Flussdichte des Statorfelds verringert, indem die elektrische Maschine 2 zur Verringerung der Bestromung der Statorwicklungen 19 angesteuert wird. Es folgte auf die Antizipation des Beschleunigungswunsches also keine tatsächliche entsprechende Aktion des Fahrers, so dass zur Vermeidung eines weiteren Energieaufwandes für die vorbereitende Aufrechterhaltung des Statorfelds dieses wieder in den ersten Betriebszustand zurückgeführt wird. Das Verfahren wird dann im Schritt S2 mit der Überprüfung auf das Vorliegen eines neuen Ankündigungssignals fortgesetzt.

Das zuvor beschriebene Verfahren ist jedoch nicht auf Asynchronmaschinen beschränkt, so dass grundsätzlich jeder Maschinentyp verwendet werden kann. Die Erhöhung oder der Aufbau des Magnetfelds kann beispielsweise unmittelbar im Rotor 20 und auch durch Induktionseffekte im Stator 18 erfolgen. In einem weiteren Ausführungsbeispiel eines Kraftfahrzeugs 1 ist die elektrische Maschine 2 eine permanenterregte Synchronmaschine, wobei auch hier im Schritt S3 die Flussdichte des Statorfelds erhöht wird, um solchen elektrischen Maschinen 2 eine gewisse Verringerung der Latenzzeiten zu erzielen.

In einem weiteren Ausführungsbeispiel eines Kraftfahrzeugs 1 ist die elektrische Maschine 2 als fremderregte Synchronmaschine ausgebildet, wobei der Rotor 20 eine Erregerwicklung zum Erzeugen eines Erregerfelds aufweist. Beim Ansteuern dieser elektrischen Maschine 2 wird im Schritt S3 zusätzlich auch eine Flussdichte des Erregerfelds durch Bestromen von Erregerwicklungen des Rotors 20 erhöht. Auch dies ermöglicht eine signifikante Verringerung von Latenzzeiten beim Beschleunigen des Kraftfahrzeugs 1.

## Patentansprüche

1. Verfahren zur Ansteuerung einer elektrischen Maschine (2) für den Antrieb eines Kraftfahrzeugs (1), wobei bei Vorliegen eines einen künftigen Beschleunigungswunsch des Fahrers ankündigenden Ankündigungssignals eine Flussdichte wenigstens eines in der elektrischen Maschine (2) erzeugten Magnetfelds erhöht wird, wonach bei Vorliegen eines den angekündigten Beschleunigungswunsch bestätigenden Bestätigungssignals die elektrische Maschine (2) zur Erhöhung ihrer Drehzahl und/oder ihres Drehmoments angesteuert wird, **dadurch gekennzeichnet, dass** ein Ankündigungssignal verwendet wird, welches durch Auswerten einer eine Umgebung des Kraftfahrzeugs (1) in Fahrtrichtung beschreibenden Umgebungsinformation erzeugt wird, wobei die Umgebungsinformation eine Aufhebung oder einer Erhöhung einer Geschwindigkeitsbeschränkung und/oder ein Passieren eines Kurvenscheitels einer durch das Kraftfahrzeug (1) befahrenen Kurve und/oder ein Lichtzeichen einer Lichtsignalanlage (16), welches eine Fahrtfreigabe erteilt oder die Erteilung oder Beendigung der Fahrtfreigabe ankündigt, beschreibt, wobei die elektrische Maschine (2) einen Stator (18) mit mehreren Statorwicklungen (19) zum Erzeugen eines Statorfelds als Magnetfeld aufweist und zum Erhöhen der Flussdichte des Statorfelds die Statorwicklungen (19) bestromt werden und/oder wobei die elektrische Maschine (2) einen Rotor (20) mit wenigstens einer Erregerwicklung zum Erzeugen eines Erregerfelds als Magnetfeld aufweist und zum Erhöhen der Flussdichte des Erregerfelds die wenigstens eine Erregerwicklung bestromt wird.

2. Verfahren nach Anspruch 1,
**dadurch gekennzeichnet,**
**dass** ein Bestätigungssignal verwendet wird, welches bei einem Betätigen einer Fahrbetätigungsvorrichtung (6) des Kraftfahrzeugs (1) erzeugt wird.

3. Verfahren nach Anspruch 1 oder 2,
**dadurch gekennzeichnet,**
**dass** die Flussdichte nach Vorliegen des Ankündigungssignals bei Ablauf einer vorgegeben Zeitspanne und Ausbleiben eines Bestätigungssignals verringert wird.

4. Kraftfahrzeug, umfassend eine elektrische Maschine (2) zum Antreiben des Kraftfahrzeugs (1) und eine Steuereinrichtung (4),
**dadurch gekennzeichnet,**
**dass** die elektrische Maschine (2) durch die Steuereinrichtung (4) gemäß einem Verfahren nach einem der vorhergehenden Ansprüche ansteuerbar ist.

## Claims

1. Method for controlling an electric machine (2) for driving a motor vehicle (1), wherein a flux density of at least one magnetic field generated in the electric machine (2) is increased when an announcement signal is present that announces an upcoming acceleration command by the driver, after which when a confirmation signal is present that confirms the announced acceleration command, the electric machine (2) is controlled in such a way that the speed and/or torque thereof increases, **characterised in that** an announcement signal is used, which is generated by evaluating a piece of environmental information describing an environment of the motor vehicle (1) in the direction of travel, wherein the piece of environmental information describes a lifting or an increasing of a speed limit and/or a passing of an apex of a curve travelled by the motor vehicle (1) and/or a light signal of a light signal system (16) which issues a clearance to move or announces the granting or ending of the clearance to move, wherein the electric machine (2) has a stator (18) comprising a plurality of stator windings (19) for generating a stator field as a magnetic field and a current flows through the stator windings (19) in order to increase the flux density of the stator field and/or wherein the electric machine (2) has a rotor (20) comprising at least one excitation winding for generating an excitation field as a magnetic field and a current flows through the at least one excitation winding in order to increase the flux density of the excitation field.

2. Method according to claim 1, **characterised in that** a confirmation signal is used, which is generated when a driving actuation device (6) of the motor vehicle (1) is actuated.

3. Method according to claim 1 or 2, **characterised in that** the flux density is reduced after the announcement signal is present when a predetermined period of time has expired and when a confirmation signal is absent.

4. Motor vehicle, comprising an electric machine (2) for driving the motor vehicle (1) and a control device (4), **characterised in that** the electric machine (2) can be controlled by the control device (4) according to a method according to any one of the preceding claims.

## Revendications

1. Procédé de commande d'une machine électrique (2) pour la propulsion d'un véhicule à moteur (1), dans lequel en présence d'un signal d'annonce annonçant une volonté d'accélération future du conducteur, une densité de flux d'au moins un champ magnétique produit dans la machine électrique (2) est élevée, après quoi, en présence d'un signal de confirmation confirmant la volonté d'accélération annoncée, la machine électrique (2) est commandée en vue de l'élévation de sa vitesse de rotation et/ou de son couple, **caractérisé en ce qu'**un signal d'annonce est utilisé qui est généré en évaluant une information environnementale décrivant un environnement du véhicule à moteur (1) dans le sens de la marche, dans lequel l'information environnementale décrit une annulation ou une élévation d'une limitation de vitesse et/ou un passage du sommet d'un virage parcouru par le véhicule à moteur (1) et/ou un signal lumineux d'un système de feu signalisation (16), qui donne l'autorisation de circuler ou annonce l'octroi ou la fin de l'autorisation de circuler, dans lequel la machine électrique (2) comporte un stator (18) avec une pluralité d'enroulements statoriques (19) pour générer un champ statorique sous forme de champ magnétique et les enroulements statoriques (19) sont excités pour élever la densité de flux du champ statorique et/ou dans lequel la machine électrique (2) comporte un rotor (20) avec au moins un enroulement d'excitation pour générer un champ d'excitation sous forme de champ magnétique et l'au moins un enroulement d'excitation est excité pour augmenter la densité de flux du champ d'excitation.

2. Procédé selon la revendication 1,
**caractérisé en ce que**
un signal de confirmation est utilisé, qui est généré lorsqu'un dispositif d'actionnement de conduite (6) du véhicule à moteur (1) est actionné.

3. Procédé selon la revendication 1 ou 2,
**caractérisé en ce que**
la densité de flux après la présence du signal d'annonce est réduite lorsqu'une durée prédéterminée s'est écoulée et en l'absence de signal de confirmation.

4. Véhicule à moteur, comprenant une machine électrique (2) pour entraîner le véhicule à moteur (1) et un dispositif de commande (4),
**caractérisé en ce que**
la machine électrique (2) peut être commandée par le dispositif de commande (4) selon un procédé selon l'une quelconque des revendications précédentes.
